# EUROPEAN PATENT APPLICATION

(11) **EP 4 242 148 A1**
(43) Date of publication of application: **13.09.2023**
(21) Application number: 21888950.9
(22) Date of filing: 01.10.2021
(51) Int. Cl.: B65H 5/38, H04N 1/028, H04N 1/193, G07D 7/121

(54) **OPTICAL LINE SENSOR MEMBER AND PRODUCTION METHOD FOR SAME**

(30) Priority: 04.11.2020 JP 2020184281
(71) Applicant: Vienex Corporation, Kanonji-shi, Kagawa 768-0021 (JP)
(72) Inventor: MARUYAMA, Koji, Kanonji-shi, Kagawa 768-0021 (JP)
(74) Representative: Mewburn Ellis LLP
(86) International application number: PCT/JP2021/036484
(87) International publication number: WO 2022/097397

(57) **Abstract**

A member of an optical line sensor unit 1 having a light source unit 5 that emits light toward a conveyance path 3 and a light receiving unit 8 that outputs a signal corresponding to a light amount from the conveyance path 3 includes a transparent member 11 that transmits light incident on the light receiving unit 8, and a cover member 12 that is arranged to surround an outer periphery of the transparent member 11 and does not transmit light. Acomb-shaped protruding portion 11c is formed on a side parallel to a main scanning direction on an outer periphery of the transparent member 11, and a comb-shaped recessed portion 12c for receiving the comb-shaped protruding portion 11c is formed at a position facing the transparent member 11 of the cover member 12. The comb-shaped protruding portion 11c of the transparent member 11 is joined to an abutting portion of the comb-shaped recessed portion 12c of the cover member 12 with an adhesive.

## Description

### TECHNICAL FIELD

The present invention relates to an optical line sensor member for protecting a component provided inside an optical line sensor unit for reading paper sheets such as general-purpose paper, paper money, and securities from paper dust, dust, and the like, and a production method for the optical line sensor member.

### BACKGROUND ART

Conventionally, an optical line sensor member for protecting a component provided inside an optical line sensor unit for reading paper sheets such as general-purpose paper, paper money, and securities from paper dust, dust, and the like is generally constituted by a transparent portion that transmits light and an opaque portion that does not transmit light. Specifically, the transparent portion is in a state of being surrounded by the opaque portion. In a case where a step is generated at a boundary between the transparent portion and the opaque portion, paper sheets being conveyed are caught by the step, and a paper jam may occur. For example, in a case where paper sheets are conveyed at a high speed, a paper jam occurs even with a slight step of several 10 µm (50 to 60 µm). Therefore, in order to stably convey paper sheets, it is desirable to minimize a step in the transparent portion and the opaque portion.

In view of such a background, an optical line sensor member has been conventionally manufactured using a method for reducing a step at a boundary between the transparent portion and the opaque portion. (See Patent Documents 1, 2, and 3)

### PRIOR ART DOCUMENTS

### PATENT DOCUMENTS

Patent Document 1: WO 2015/098300 A
Patent Document 2: JP 2012-075008 A
Patent Document 3: JP 2010-268131 A

### SUMMARY OF THE INVENTION

### PROBLEMS TO BE SOLVED BY THE INVENTION

However, conventionally, in each member having a surface facing a conveyance path, such as a member constituting a transparent portion (hereinafter referred to as "transparent member") and a member constituting an opaque portion (hereinafter referred to as "cover member"), it is difficult to eliminate a step that causes a paper jam, and it is not realistic to reduce a step generated by a difference in thickness between each member to several 10 µm or less.

In view of such circumstances, an object of the present invention is to provide an optical line sensor member in which occurrence of a paper jam can be prevented, and a production method for the optical line sensor member.

### MEANS FOR SOLVING THE PROBLEMS

A first invention is a member of an optical line sensor unit having a light source unit that emits light toward a conveyance path and a light receiving unit that outputs a signal corresponding to a light amount from the conveyance path. The member includes a transparent member that transmits light incident on the light receiving unit, and a cover member that is arranged to surround an outer periphery of the transparent member and does not transmit light. A comb-shaped protruding portion is formed on a side parallel to a main scanning direction on an outer periphery of the transparent member, and a comb-shaped recessed portion that receives the comb-shaped protruding portion of the transparent member is formed at a position facing the transparent member of the cover member. The comb-shaped protruding portion of the transparent member is joined to an abutting portion of the comb-shaped recessed portion of the cover member with an adhesive.

According to the first invention, the comb-shaped protruding portion is formed on the transparent member, and the comb-shaped recessed portion is formed on the cover member, so that a contact area between the optical line sensor member and paper sheets such as general-purpose paper, paper money, and securities is reduced, and occurrence of a paper jam can be prevented.

A second invention is a member of an optical line sensor unit having a light source unit that emits light toward a conveyance path and a light receiving unit that outputs a signal corresponding to a light amount from the conveyance path. The member includes a transparent member that transmits light incident on the light receiving unit, a first cover member that holds an outer periphery of the transparent member, and a second cover member that is arranged to surround an outer periphery of the first cover member and does not transmit light. A comb-shaped protruding portion is formed on a side parallel to a main scanning direction on an outer periphery of the first cover member, and a comb-shaped recessed portion that receives the comb-shaped protruding portion of the first cover member is formed at a position facing the first cover member of the second cover member. The comb-shaped protruding portion of the first cover member is joined to an abutting portion of the comb-shaped recessed portion of the second cover member with an adhesive.

According to the second invention, similarly to the first invention, a contact area between the paper sheet and the optical line sensor member is reduced, and occurrence of a paper jam can be prevented.

A third invention is a member of an optical line sensor unit having a light source unit that emits light toward a conveyance path and a light receiving unit that outputs a signal corresponding to a light amount from the conveyance path. The member includes a transparent member that transmits light incident on the light receiving unit, a first cover member that holds an outer periphery of the transparent member, and a second cover member that is arranged to surround an outer periphery of the first cover member and does not transmit light. A tapered surface is formed on a side parallel to a main scanning direction on an outer periphery of the first cover member, and a tapered surface parallel to the tapered surface of the first cover member is formed at a position facing the first cover member of the second cover member. An inclination angle of the tapered surface of the first cover member and an inclination angle of the tapered surface of the second cover member are substantially the same, and the tapered surface of the first cover member and the tapered surface of the second cover member are joined with an adhesive.

A fourth invention is dependent on the second or third invention. The transparent member has a substantially rectangular cross section taken along a direction orthogonal to the main scanning direction, and the first cover member has an opening into which the transparent member is inserted. A step surface is formed on a side parallel to the main scanning direction of the opening, and an end portion of the transparent member and the step surface of the first cover member are joined with an adhesive.

A fifth invention is dependent on the second or third invention. The transparent member has a substantially trapezoidal shape in which a side on the conveyance path side is a short side in a cross section taken along a direction orthogonal to a main scanning direction, and has a tapered surface in which an inclination is provided on a side parallel to the main scanning direction. The first cover member has a tapered surface formed substantially parallel to the tapered surface provided on a side parallel to the main scanning direction of the transparent member. The tapered surface of the transparent member and the tapered surface of the first cover member are joined with an adhesive.

A sixth invention is dependent on the first invention, and a light blocking member is arranged in the vicinity of the comb-shaped protruding portion in the transparent member.

A seventh invention is dependent on any of the first to fifth inventions. The adhesive is any of an ultraviolet light curable adhesive, a thermosetting adhesive, a thermoplastic adhesive, a moisture curable adhesive, and a two-liquid curable adhesive.

An eighth aspect of the present invention is dependent on any of the first to sixth inventions, and the transparent member is glass.

A ninth aspect of the present invention is dependent on the second or third invention, and the first cover member is transparent.

A tenth invention is a production method for the optical line sensor member according to the third invention. The production method includes the steps of applying the adhesive to the tapered surface of the first cover member or the tapered surface of the second cover member, causing the tapered surface of the first cover member and the tapered surface of the second cover member to face each other, placing a flat plate on the conveyance path side and pressing the first cover member against the flat plate by a pressing member from a direction opposite to the conveyance path side, and curing the adhesive.

According to the tenth invention, the tapered surface of the second cover member is corrected in accordance with the tapered surface of the first cover member, and the first cover member and the second cover member can be joined while a difference in warpage correction between the members is minimized. Therefore, it is possible to eliminate a step that causes a paper jam.

An eleventh invention is dependent on the ninth invention. The adhesive is an ultraviolet light curable adhesive, and in the step of curing the adhesive, the tapered surface of the first cover member and the tapered surface of the second cover member are irradiated with ultraviolet light from an ultraviolet light source.

A twelfth invention is dependent on the tenth invention, and in the step of curing the adhesive, a part of ultraviolet light from the ultraviolet light source is blocked by the pressing member.

### EFFECTS OF THE INVENTION

According to the invention of the present application, it is possible to prevent occurrence of a paper jam when paper sheets such as general-purpose paper, paper money, and securities are conveyed.

### BRIEF DESCRIPTION OF THE DRAWINGS

FIG. 1 is a cross-sectional view schematically illustrating an example of a configuration of an optical line sensor unit according to a first embodiment.
FIG. 2 is a perspective view schematically illustrating a part of an example of the configuration of the optical line sensor unit according to the first embodiment.
FIG. 3 is a perspective view schematically illustrating an example of a configuration of an optical line sensor member according to the first embodiment.
FIG. 4 is a cross-sectional view schematically illustrating an example of the configuration of the optical line sensor member according to the first embodiment.
FIG. 5 is a perspective view schematically illustrating an example of the configuration of the optical line sensor member according to a second embodiment.
FIG. 6 is a cross-sectional view schematically illustrating an example of the configuration of the optical line sensor member according to the second embodiment.
FIG. 7 is a cross-sectional view schematically illustrating an example of the configuration of the optical line sensor member according to a third embodiment.
FIG. 8 is a cross-sectional view schematically illustrating an example of a state in which a first cover member is pressed.
FIG. 9 is a cross-sectional view schematically illustrating another example of the state in which the first cover member is pressed.
FIG. 10 is a cross-sectional view schematically illustrating an example of a state in which an adhesive is cured.

### MODE FOR CARRYING OUT THE INVENTION

### 1. Overall configuration of optical line sensor unit of first embodiment

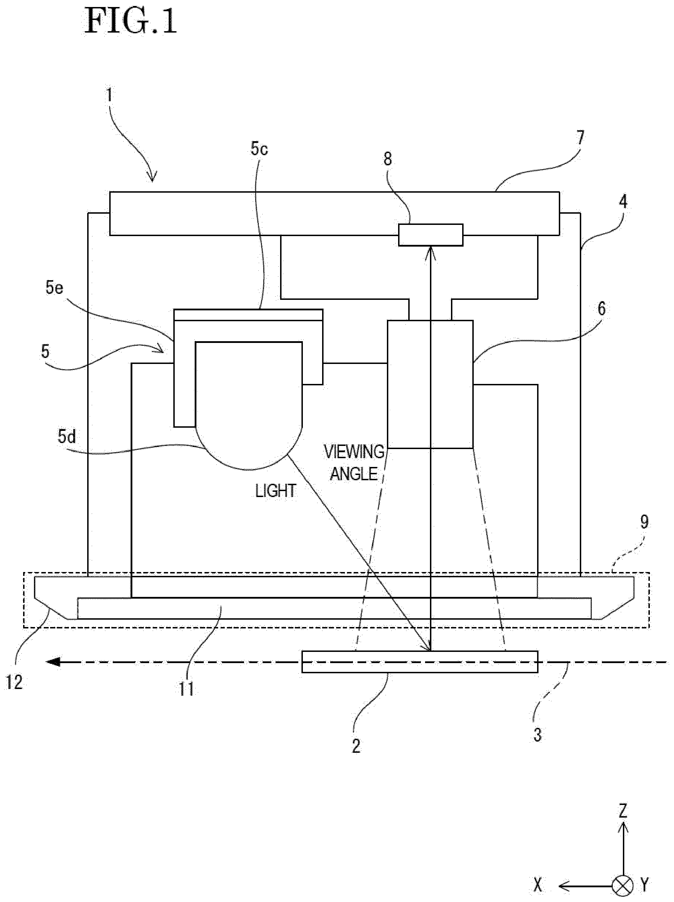

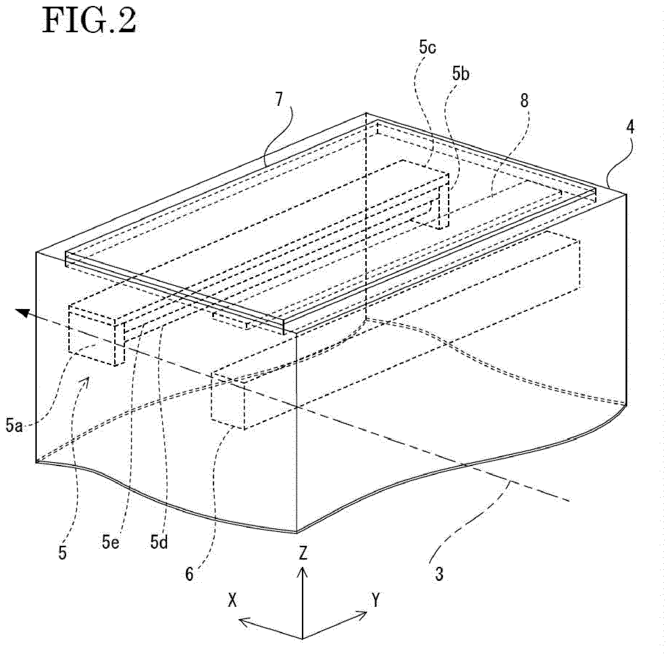

First, an optical line sensor unit 1 will be described with reference to FIGS. 1 and 2. FIG. 1 is a cross-sectional view schematically illustrating an example of a configuration of the optical line sensor unit 1 according to a first embodiment, and FIG. 2 is a perspective view schematically illustrating a part of the example of the configuration of the optical line sensor unit 1 according to the first embodiment.

At least one or more of the optical line sensor units 1 provided in a conveyance path 3 for conveying a paper sheet 2 includes a housing 4, a light source unit 5, a lens array 6, a substrate 7, a light receiving unit 8 mounted on the substrate 7, and an optical line sensor member 9. Note that the paper sheet 2 in the first embodiment corresponds to, for example, general-purpose paper, paper money, and securities.

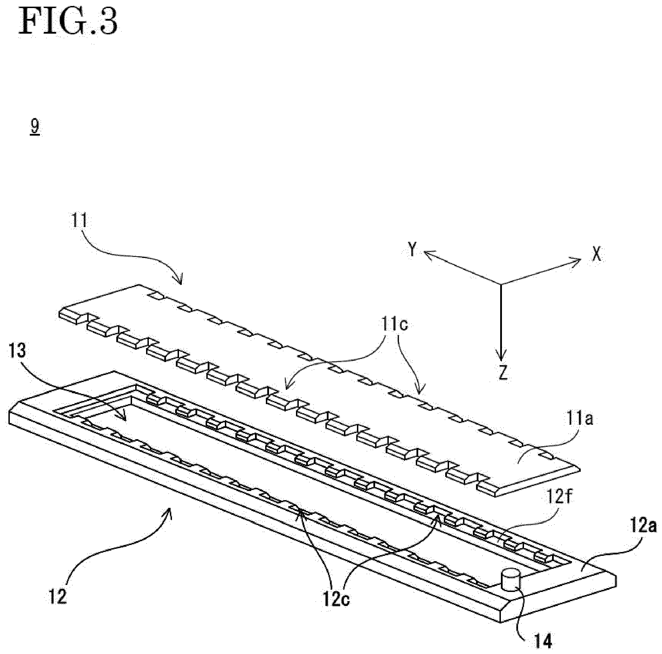

Further, as illustrated in FIG. 2, the housing 4 and the substrate 7 extend in a Y-axis direction, and the light source unit 5, the lens array 6, and the light receiving unit 8 extend in the Y-axis direction in the housing 4. Further, as illustrated in FIG. 3, the optical line sensor member 9 also extends in the Y-axis direction similarly to the housing 4. The Y-axis direction is a main scanning direction.

The light source unit 5 is a line light source for irradiating the paper sheet 2 conveyed in an X-axis direction on the conveyance path 3 with light. The X-axis direction is a sub-scanning direction and is orthogonal to the Y-axis direction. Note that a Z-axis direction is a height direction of the housing 4, the light source unit 5, the optical line sensor member 9, and the like.

Further, as illustrated in FIG. 2, the light source unit 5 includes a first light source 5a and a second light source 5b. The first light source 5a is provided at an end portion of the light source unit 5 in the Y-axis direction, and the second light source 5b is provided at another end portion.

The first light source 5a includes an ultraviolet light source and a substrate for mounting the ultraviolet light source, and the second light source 5b includes a light source corresponding to light other than ultraviolet light and a substrate for mounting the light source. Note that, here, the light other than ultraviolet light includes at least one of visible light and infrared light. However, a type of the light source is not limited to these, and one of the first light source 5a and the second light source 5b can be omitted.

Further, the light source unit 5 includes a substrate 5c for supplying power to the first light source 5a or the second light source 5b, and the substrate 5c is connected to a power supply (not illustrated) for driving the light source unit 5.

Furthermore, the light source unit 5 includes a light guide 5d and a cover member 5e for holding the light guide 5d, and light incident on the light guide 5d from the first light source 5a and the second light source 5b is diffused and refracted in the light guide 5d, and then emitted from the light guide 5d. The light guide 5d extends in the Y-axis direction, and the first light source 5a and the second light source 5b are provided at both end portions in the Y-axis direction of the light guide 5d. Light emitted from a side surface (emission surface) of the light guide 5d along the Y-axis direction is emitted with a uniform light amount along the Y-axis direction.

The paper sheet 2 is irradiated with visible light, ultraviolet light, infrared light, and the like from the light source unit 5. Further, for ultraviolet light, any value between 300 nm and 400 nm is taken as a peak wavelength, and for infrared light, any value up to 1500 nm is taken as a peak wavelength.

Furthermore, at least ultraviolet light of light with which the paper sheet 2 is irradiated may be emitted so as not to temporally overlap other light (that is, while being temporally switched). Moreover, infrared light may be emitted so as to temporally overlap visible light, or may be emitted so as not to temporally overlap visible light.

The lens array 6 is an optical element for forming an image of (converging) light (reflected light and fluorescence) from the paper sheet 2 on the light receiving unit 8, and a rod lens array such as SELFOC lens array (registered trademark: manufactured by Nippon Sheet Glass Co., Ltd) is used as the lens array 6. In the embodiment of the present invention, magnification of the lens array 6 is set to 1 (erect). Further, the lens array 6 may be provided with an optical filter that blocks ultraviolet light in order to prevent irradiation of the light receiving unit 8 with ultraviolet light.

The light receiving unit 8 is configured to include at least a general-purpose light receiving element. In the light receiving unit 8, light from the paper sheet 2 is detected, and a signal corresponding to a light amount of the light is output to the substrate 7. Further, as the light receiving unit 8, what is called a multi-chip type linear image sensor obtained by arranging a plurality of integrated circuits (ICs) in which a photodiode, a phototransistor, a drive circuit, and an amplifier circuit are integrated may be used.

Further, an electric circuit such as a drive circuit or an amplifier circuit, a connector for extracting a signal to the outside, or the like may be mounted on the substrate 7 as necessary. Furthermore, an A/D converter, various correction circuits, an image processing circuit, a line memory, an I/O control circuit, and the like may be mounted on the substrate 7, and a digital signal may be extracted to the outside.

The optical line sensor member 9 is provided to protect the light source unit 5, the lens array 6, and the like from dust (for example, paper dust). As illustrated in FIG. 1, the optical line sensor member 9 is provided between the conveyance path 3 and the housing 4 so as to cover an internal space of the housing 4 in which the light source unit 5, the lens array 6, and the like are provided.

### 2. Configuration of optical line sensor member of first embodiment

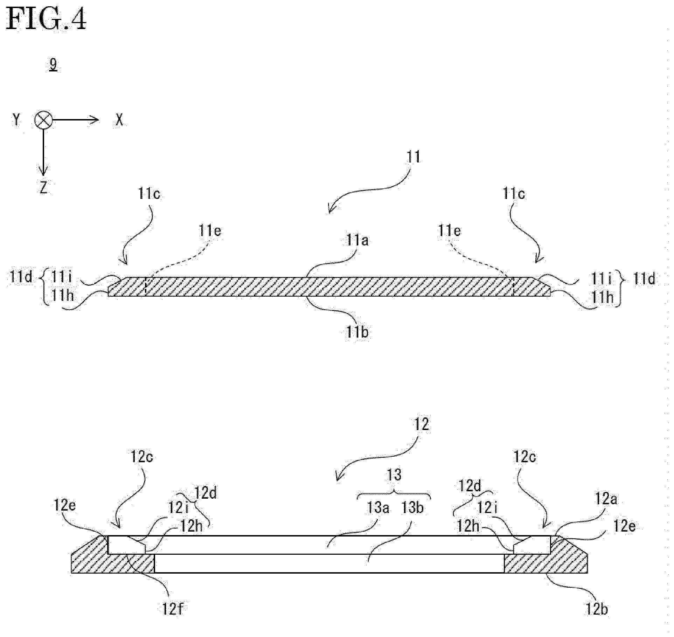

The optical line sensor member 9 will be specifically described with reference to FIGS. 3 and 4. FIG. 3 is a perspective view schematically illustrating an example of a configuration of the optical line sensor member 9 according to the first embodiment, and FIG. 4 is a cross-sectional view schematically illustrating an example of the configuration of the optical line sensor member 9 according to the first embodiment. Note that FIGS. 3 and 4 are also diagrams illustrating a state in which a transparent member 11 described later is separated from a cover member 12 described later in the Z-axis direction.

As illustrated in FIGS. 3 and 4, the optical line sensor member 9 includes the transparent member 11 and the cover member 12 provided around the transparent member 11.

The transparent member 11 is a transparent plate that transmits light. As the transparent member 11, for example, a plate made from glass, specifically, white plate glass, borosilicate glass, or the like is used from the viewpoint of abrasion resistance. Glass has excellent transmittance for ultraviolet rays, and further has excellent transmittance not only for ultraviolet rays but also to a near-infrared region. Further, as the transparent member 11, a plate made from resin, specifically, a plate made from acrylic resin, cycloolefin-based resin, or the like may be used.

Further, the transparent member 11 has a conveyance surface 11a and an incident surface 11b. The conveyance surface 11a is a surface located on the conveyance path 3 side among surfaces parallel to the conveyance path 3, and the incident surface 11b is a surface located on the opposite side to the conveyance path 3 side among surfaces parallel to the conveyance path 3 and on which light from the light source unit 5 is incident.

Furthermore, in the first embodiment, comb-shaped protruding portions 11c are formed symmetrically at both end portions (outer end portions) in the X-axis direction of the transparent member 11.

Specifically, protruding portions protruding outward from the transparent member 11 along the X-axis direction are formed at regular intervals along the Y-axis direction on an outer end portion of the transparent member 11. Therefore, a comb-shaped protruding portion can be said to be formed on a side parallel to the Y-axis direction on an outer periphery of the transparent member 11.

Furthermore, the transparent member 11 has abutting surfaces (not illustrated) which are a pair of end surfaces in the Y-axis direction. Further, the transparent member 11 has an end surface 11d and an abutting surface 11e that form a pair in the X-axis direction.

Further, a pair of the end surfaces 11d include an abutting surface 11h parallel to the Z-axis direction and a tapered surface 11i that is tapered toward the conveyance path 3. Therefore, in the first embodiment, a part or the whole of a pair of the end surfaces 11d are formed to be tapered toward the conveyance path 3.

Further, inclination angles of the tapered surfaces 11i included in the end surfaces 11d with respect to the conveyance surface 11a coincide with each other. That is, the transparent member 11 has a substantially trapezoidal shape including a trapezoid in a whole or a part of a cross section when cut along the X-axis direction.

As the cover member 12, for example, an opaque plate that does not transmit light is used. Since a material and material quality of the cover member 12 are not particularly limited, for example, a plate made from resin or the like as described above is used as the cover member 12. From the viewpoint of reducing stray light caused by light from outside a viewing angle (see FIG. 1) via the lens array 6 of the light receiving unit 8, a black plate may be used as the cover member 12.

Further, the cover member 12 has a conveyance surface 12a and an incident surface 12b. The conveyance surface 12a is a surface located on the conveyance path 3 side among surfaces parallel to the conveyance path 3. The incident surface 12b is located on the side opposite to the conveyance path 3 side among surfaces parallel to the conveyance path 3.

As described above, since the cover member 12 is provided around the transparent member 11, a through hole (opening) 13 penetrating in the Z-axis direction, that is, in a height direction of the cover member 12 is formed in the cover member 12.

The through hole 13 includes a first through hole 13a and a second through hole 13b. The first through hole 13a is a hole on the conveyance path 3 side, and the second through hole 13b is a hole located on the housing 7 side.

A shape of the first through hole 13a in an XY plane is similar to a shape of the transparent member 11 in the XY plane. Therefore, a width of the first through hole 13a in the X-axis direction is similar to a width of the transparent member 11 in the X-axis direction. Further, a width of the first through hole 13a in the Y-axis direction is similar to a width of the transparent member 11 in the Y-axis direction.

A width of the second through hole 13b in the X-axis direction is smaller than a width of the transparent member 11 in the X-axis direction. Further, a width of the second through hole 13b in the Y-axis direction is smaller than a width of the transparent member 11 in the Y-axis direction. Note that the width of the second through hole 13b in the Y-axis direction may be similar to the width of the transparent member 11 in the Y-axis direction.

Further, a center of the first through hole 13a and a center of the second through hole 13b overlap each other in the Z-axis direction. From these, the size of the through hole 13 can be said to change stepwise.

Note that a depth of the first through hole 13a in the Z-axis direction is substantially equal to a height of the transparent member 11 in the Z-axis direction. Further, a depth of the first through hole 13a in the Z-axis direction is preferably set to be larger than a height of the transparent member 11 in the Z-axis direction. That is, the height of the transparent member 11 in the Z-axis direction is preferably set to be smaller than the depth of the first through hole 13a in the Z-axis direction.

Further, since the through hole 13 is formed in the cover member 12, the cover member 12 has end portions facing each other through the through hole 13. In the first embodiment, comb-shaped recessed portions 12c are formed symmetrically at end portions (inner end portions) facing each other through the first through hole 13a in the X-axis direction.

Specifically, in the inner end portion of the cover member 12, recessed portions recessed outward of the cover member 12 along the X-axis direction are formed at regular intervals in the Y-axis direction.

Furthermore, since the cover member 12 has end portions facing each other through the through hole 13, the cover member 12 has abutting surfaces (not illustrated) defining the first through hole 13 and forming a pair in the Y-axis direction. Further, the cover member 12 has an end surface 12d and an abutting surface 12e that define the first through hole 13, and form a pair in the X-axis direction.

Furthermore, in the first embodiment, a pair of the end surfaces 12d include an abutting surface 12h parallel to the Z-axis direction and a tapered surface 12i that is tapered away from the conveyance path 3. Therefore, in the first embodiment, a part or the whole of a pair of the end surfaces 12d is formed to be tapered away from the conveyance path 3. Further, inclination angles of the tapered surfaces 12i included in the end surfaces 12d with respect to the conveyance surface 12a coincide with each other.

Further, as illustrated in FIG. 3, a protruding portion 14 protruding in the Z-axis direction is provided at a portion not overlapping the conveyance path 3 when viewed along the Z-axis direction in one end portion in the Y-axis direction of the conveyance surface 12a of the cover member 12. Note that the protruding portion 14 serves as a reference when a detection sensor for detecting a position of the paper sheet 2 is arranged.

In the first embodiment, the transparent member 11 is joined to the cover member 12 with an adhesive. Specifically, the transparent member 11 is joined to the cover member 12 with an adhesive in the through hole 13. More specifically, the transparent member 11 is joined to the cover member 12 with an adhesive in the first through hole 13a.

Further, in this case, the comb-shaped protruding portion 11c and the comb-shaped recessed portion 12c are joined with an adhesive. Therefore, the abutting surface 11h and the abutting surface 12e are joined with an adhesive, and the abutting surface 12h and the abutting surface 11e are also joined in a similar manner.

Further, a surface defining the first through hole 13a also includes a step surface (abutting surface) 12f corresponding to a step between first through hole 13a and second through hole 13b. The abutting surface 12f is a surface orthogonal to the Z-axis direction, and the abutting surface 12f is joined to a part of the incident surface 11b with an adhesive. Note that in a case where a width of the second through hole 13b in the Y-axis direction is similar to a width of the transparent member 11 in the Y-axis direction, only the abutting surface 12f extending in the Y-axis direction is formed in the cover member 12.

Therefore, it can be said that the cover member 13 has the through hole 13 into which the transparent member 11 is inserted, the abutting surface 12f is formed on a side parallel to at least the Y-axis direction between the X-axis direction and the Y-axis direction of the through hole 13, and an end portion of the transparent member 11, specifically, a part of the incident surface 11b and the abutting surface 12f are joined with an adhesive.

Further, in the first embodiment, it can be said that the comb-shaped protruding portion 11c is formed on a side parallel to the Y-axis direction on an outer periphery of the transparent member 11, the comb-shaped recessed portion 12c which receives the comb-shaped protruding portion 11c is formed at a position facing the comb-shaped protruding portion 11c of the cover member 12, and the comb-shaped protruding portion 11c is joined to an abutting portion of the comb-shaped recessed portion 12c with an adhesive. The abutting portion includes the abutting surfaces 12e, 12h, and 12f.

In the first embodiment, since the comb-shaped protruding portion 11c is formed on the transparent member 11 and the comb-shaped recessed portion 12c is formed on the cover member 12, a contact area between the paper sheet 2 and the optical line sensor member 9 is reduced. Therefore, even if a height difference is generated between the conveyance surface 11a of the transparent member 11 and the conveyance surface 12a of the cover member 12, occurrence of a paper jam can be prevented.

Further, in a case where the comb-shaped protruding portion 11c has the tapered surface 11i, it is possible to release a force in a conveyance direction applied to the paper sheet 2 along with conveyance of the paper sheet 2. Therefore, occurrence of a paper jam can be further prevented. Furthermore, the above similarly applies to a case where the comb-shaped recessed portion 12c has the tapered surface 12i, and a case where the comb-shaped protruding portion 11c has the tapered surface 11i and the comb-shaped recessed portion 12c has the tapered surface 12i.

Note that when the tapered surface 11i and the tapered surface 12i intersect in a cross section along the X-axis direction as illustrated in FIG. 4, a groove extending in the Y-axis direction is formed. Therefore, in the present embodiment, a width of the comb-shaped protruding portion 11c in the X-axis direction, a width of the comb-shaped recessed portion 12c in the X-axis direction, an inclination angle of each tapered surface, and the like are set so that the tapered surface 11i and the tapered surface 12i do not intersect in the cross section along the X-axis direction as illustrated in FIG. 4.

As an adhesive, a general-purpose adhesive is used, and for example, a thermosetting adhesive, a thermoplastic adhesive, a moisture curable adhesive, a two-liquid curable adhesive, or the like is used. An ultraviolet light curable adhesive is an adhesive that is cured by being irradiated with ultraviolet light. The thermosetting adhesive is an adhesive that is cured by being heated. The thermoplastic adhesive is an adhesive that is melted when heated and then cured when cooled. The moisture curable adhesive is an adhesive that reacts with moisture in the air to be cured. The two-liquid curable adhesive is an adhesive that is cured by mixing a curing agent with a main agent.

Furthermore, since reflected light of the paper sheet 2 incident from the vicinity of the comb-shaped protruding portion 11c and the comb-shaped recessed portion 12c has an adverse effect on detection of the paper sheet 2 and the like, a light blocking means may be provided in the vicinity of the comb-shaped protruding portion 11c. For example, a light blocking member is arranged in the vicinity of the comb-shaped protruding portion 11c. Specifically, a light blocking tape is arranged in the vicinity of the comb-shaped protruding portion 11c. Alternatively, the vicinity of the comb-shaped protruding portion 11c is coated with a coating material that does not transmit light.

### 3. Configuration of optical line sensor member of second embodiment

A second embodiment is similar to the first embodiment except that the configuration of the optical line sensor member 9 is changed. Therefore, description overlapping with that of the first embodiment will be omitted.

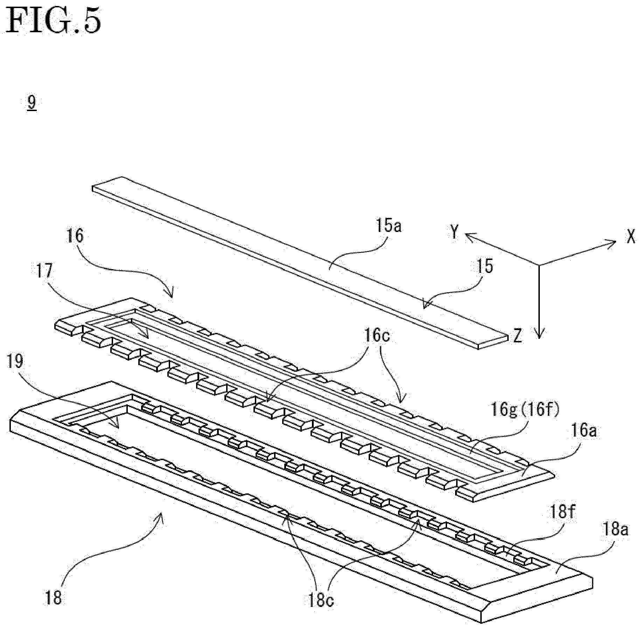

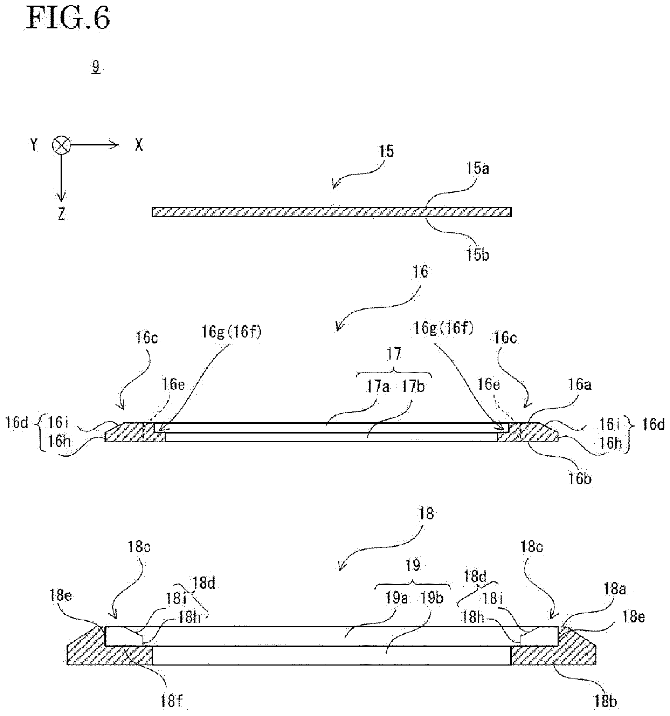

In the second embodiment, the optical line sensor member 9 is configured as illustrated in FIGS. 5 and 6. FIG. 5 is a perspective view schematically illustrating an example of a configuration of the optical line sensor member 9 according to the second embodiment, and FIG. 6 is a cross-sectional view schematically illustrating an example of the configuration of the optical line sensor member 9 according to the second embodiment. Note that FIGS. 5 and 6 are also diagrams illustrating a state in which a transparent member 15 described later is separated from a first cover member 16 described later in the Z-axis direction. Further, FIGS. 5 and 6 are also diagrams illustrating a state in which the first cover member 16 is separated from a second cover member 18 described later in the Z-axis direction.

The optical line sensor member 9 of the second embodiment includes the transparent member 15, the first cover member 16 provided around the transparent member 15, and the second cover member 18 provided around the first cover member 16. Note that, in the second and subsequent embodiments, illustration of a configuration corresponding to the protruding portion 14 is omitted.

A material of the transparent member 15 is similar to that of the transparent member 11. Further, the transparent member 15 has a substantially rectangular shape. Further, the transparent member 15 extends in the Y-axis direction. Furthermore, a cross section of the transparent member 15 taken along the X-axis direction has a substantially rectangular shape with the X-axis direction as a longitudinal direction. Note that the transparent member 15 has a conveyance surface 15a and an incident surface 15b. Description of the conveyance surface 15a and the incident surface 15b corresponding to the conveyance surface 11a and the incident surface 11b will be omitted.

A material of the first cover member 16 is similar to that of the cover member 12. Note that the material of the first cover member 16 may be similar to that of the transparent member 11. That is, light may be transmitted through the first cover member 16.

Since the first cover member 16 is provided around the transparent member 15, a through hole 17 penetrating in the Z-axis direction is formed in the first cover member 16.

A shape of the first cover member 16 other than the through hole 17 is similar to that of the transparent member 11. That is, a comb-shaped protruding portion 16c similar to the comb-shaped protruding portion 11c is formed on the first cover member 16. Note that description of a conveyance surface 16a, an incident surface 16b, an end surface 16d, an abutting surface 16e, an abutting surface 16h, and the like corresponding to the conveyance surface 11a, the incident surface 11b, the end surface 11d, the abutting surface 11e, the abutting surface 11h, and the like is omitted.

The through hole 17 includes a first through hole 17a and a second through hole 17b. The first through hole 17a is a hole on the conveyance path 3 side, and the second through hole 17b is a through hole located on the housing 7 side.

A shape of the first through hole 17a in the XY plane is similar to a shape of the transparent member 15 in the XY plane. Therefore, a width of the first through hole 17a in the X-axis direction is similar to a width of the transparent member 15 in the X-axis direction. Further, a width of the first through hole 17a in the Y-axis direction is similar to a width of the transparent member 15 in the Y-axis direction.

A width of the second through hole 17b in the X-axis direction is smaller than a width of the transparent member 15 in the X-axis direction. Further, a width of the second through hole 17b in the Y-axis direction is smaller than a width of the transparent member 15 in the Y-axis direction. Note that the width of the second through hole 17b in the Y-axis direction may be similar to the width of the transparent member 15 in the Y-axis direction.

Further, a center of the first through hole 17a and a center of the second through hole 17b overlap each other in the Z-axis direction. From these, the size of the through hole 17 can be said to change stepwise.

Note that a depth of the first through hole 17a in the Z-axis direction is substantially equal to a height of the transparent member 15 in the Z-axis direction. A depth of the first through hole 17a in the Z-axis direction is preferably set to be larger than a height of the transparent member 15 in the Z-axis direction. That is, the height of the transparent member 15 in the Z-axis direction is preferably set to be smaller than the depth of the first through hole 17a in the Z-axis direction.

Further, since the through hole 17 is formed in the first cover member 16, the first cover member 16 has an abutting surface 16g that defines the first through hole 17a. Further, the abutting surface 16g includes an abutting surface 16f that corresponds to a step between the first through hole 16a and second through hole 16b, and is orthogonal to the Z-axis direction, like the abutting surface 12f. Note that in a case where a width of the second through hole 16b in the Y-axis direction is similar to a width of the transparent member 15 in the Y-axis direction, only the abutting surface 16f extending in the Y-axis direction is formed in the first cover member 16.

Further, in the second embodiment, a material and shape of the second cover member 18 are similar to those of the cover member 12. That is, a comb-shaped recessed portion 18c similar to the comb-shaped recessed portion 12c is formed on the second cover member 15. Note that description of a conveyance surface 18a, an incident surface 18b, an end surface 18d, an abutting surface 18e, an abutting surface 18f, an abutting surface 18h, a through hole 19, and the like corresponding to the conveyance surface 12a, the incident surface 12b, the end surface 12d, the abutting surface 18e, the abutting surface 18f, the abutting surface 12f, the through hole 13, and the like is omitted.

In the second embodiment, the transparent member 15 is joined to the first cover member 16 with an adhesive. Specifically, the transparent member 15 is joined to the first cover member 16 with an adhesive in the through hole 17. Furthermore, more specifically, the transparent member 15 is joined to the first cover member 16 with an adhesive in the first through hole 17a.

Further, in this case, a part of the incident surface 15b of the transparent member 15, abutting surfaces forming a pair in the X-axis direction of the transparent member 15, and abutting surfaces forming a pair in the Y-axis direction of the transparent member 15 are joined to the abutting surface 16f with an adhesive.

Therefore, it can be said that the first cover member 16 has the through hole 17 into which the transparent member 15 is inserted, the abutting surface 16f is formed on a side parallel to at least the Y-axis direction between the X-axis direction and the Y-axis direction of the through hole 17, and an end portion of the transparent member 15, specifically, a part of the incident surface 15b and the abutting surface 16f are joined with an adhesive.

Further, in the second embodiment, the first cover member 16 is joined to the second cover member 18 with an adhesive. Specifically, the first cover member 16 is joined to the second cover member 18 with an adhesive in the through hole 19. More specifically, the first cover member 16 is joined to the second cover member 18 with an adhesive in a first through hole 19a.

In this case, the comb-shaped protruding portion 16c and the comb-shaped recessed portion 18c are joined with an adhesive. Further, in this case, as in the first embodiment, the abutting surfaces 16h and 16e, the incident surface 16b, and the like of the first cover member 16 are joined to the abutting surfaces 18e, 18h, and 18f, and the like of the second cover member 18 with an adhesive.

Therefore, it can be said that the second cover member 18 has the through hole 19 into which the first cover member 16 is inserted, the abutting surface 18f is formed on a side parallel to at least the Y-axis direction between the X-axis direction and the Y-axis direction of the through hole 19, and an end portion of the first cover member 16, specifically, a part of the incident surface 16b and the abutting surface 18f are joined with an adhesive.

Further, in the second embodiment, it can be said that the comb-shaped protruding portion 16c is formed on a side parallel to the Y-axis direction on an outer periphery of the first cover member 16, the comb-shaped recessed portion 18c which receives the comb-shaped protruding portion 16c is formed at a position facing the comb-shaped protruding portion 16c of the second cover member 18, and the comb-shaped protruding portion 16c is joined to an abutting portion of the comb-shaped recessed portion 18c with an adhesive. The abutting portion includes the abutting surfaces 18e, 18h, and 18f.

In the second embodiment, as in the first embodiment, even if a height difference is generated between the conveyance surface 16a of the first cover member 16 and the conveyance surface 18a of the second cover member 18, occurrence of a paper jam can be prevented.

### 4. Configuration of optical line sensor member of third embodiment

A third embodiment is similar to each embodiment except that the configuration of the optical line sensor member 9 is changed. Description overlapping that of the first embodiment and the second embodiment will be omitted.

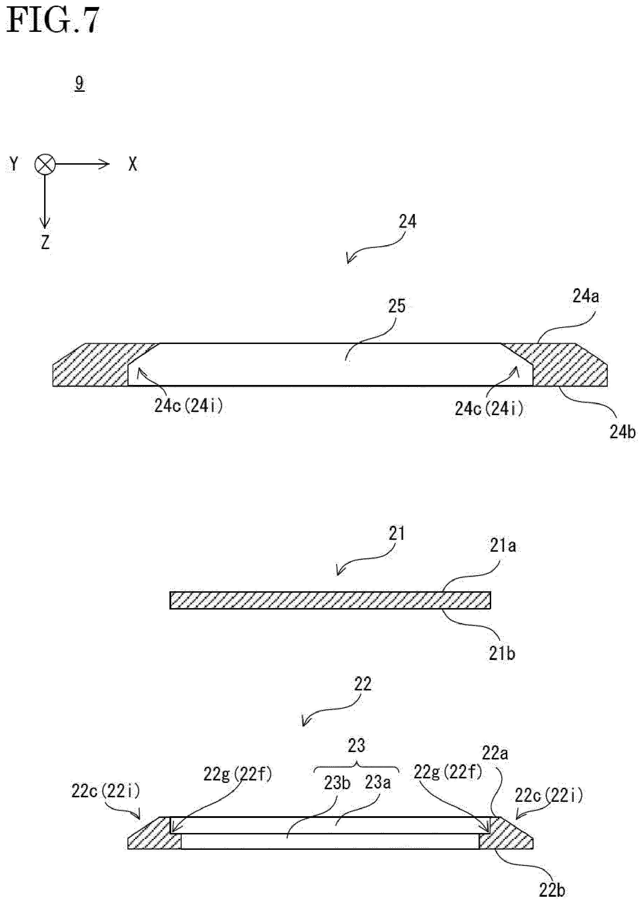

In the third embodiment, the optical line sensor member 9 is configured as illustrated in FIG. 7. FIG. 7 is a cross-sectional view schematically illustrating an example of the configuration of the optical line sensor member 9 according to the third embodiment. Note that FIG. 7 is also a diagram illustrating a state in which a transparent member 21 described later is separated from a first cover member 22 described later in the Z-axis direction. Further, FIG. 7 is also a diagram illustrating a state in which the first cover member 22 is separated from a second cover member 24 described later in the Z-axis direction.

The optical line sensor member 9 of the third embodiment includes the transparent member 21, the first cover member 22 provided around the transparent member 21, and the second cover member 24 provided around the first cover member 22.

A material and shape of the transparent member 21 are similar to those of the transparent member 15. Further, a material of the first cover member 22 is similar to that of the first cover member 16. Further, the material of the first cover member 22 may be similar to that of the transparent member 21.

Further, a shape of the first cover member 22 is similar to that of the first cover member 16 except that a part of the shape is changed. Therefore, description of a conveyance surface 22a, an incident surface 22b, an abutting surface 22f, an abutting surface 22g, a through hole 23, and the like is omitted.

In the first cover member 22, a protrusion or recess like the comb-shaped protruding portion 16c is not formed. Further, the first cover member 22 has abutting surfaces 22c forming a pair in the X-axis direction and abutting surfaces (not illustrated) forming a pair in the Y-axis direction on an outer periphery, and a part or the whole of a pair of the abutting surfaces 22c is formed of a tapered surface 22i that is tapered toward the conveyance path 3.

That is, it can be said that the tapered surface 22i is formed on a side parallel to the Y-axis direction on an outer periphery of the first cover member 22. Note that inclination angles of the tapered surfaces 22i of the abutting surfaces 22c with respect to the conveyance surface 22a coincide with each other.

From the above, in a cross section along the X-axis direction as illustrated in FIG. 7, the first cover member 22 has a substantially trapezoidal shape including a trapezoid in the whole or a part of the cross section.

A material of the second cover member 24 is similar to that of the second cover member 18. Further, a shape of the second cover member 24 is similar to that of the second cover member 18 except that a part of the shape is changed. Therefore, description of a conveyance surface 24a, an incident surface 24b, and the like is omitted.

In the second cover member 24, a protrusion or recess like the comb-shaped recessed portion 18c is not formed. Further, a through hole 25 is formed in the second cover member 24. Therefore, the second cover member 24 has abutting surfaces (not illustrated) forming a pair across the through hole 25 in the Y-axis direction and abutting surfaces 24c forming a pair across the through hole 25 in the X-axis direction.

A part or the whole of a pair of the abutting surfaces 24c is formed of a tapered surface 24i that is tapered toward the conveyance path 3. Further, inclination angles of the tapered surfaces 24i of the abutting surfaces 24c with respect to the conveyance surface 24a coincide with each other. Furthermore, an inclination angle of the tapered surface 22i with respect to the conveyance surface 22a and an inclination angle of the tapered surface 24i with respect to the conveyance surface 24a are substantially the same.

That is, in a cross section along the X-axis direction as illustrated in FIG. 7, the second cover member 24 has a substantially trapezoidal shape including a trapezoid in the whole or a part of the cross section.

In the third embodiment, the transparent member 21 is joined to the first cover member 22 with an adhesive similarly to the second embodiment.

Further, in the third embodiment, the first cover member 22 is joined to the second cover member 24 with an adhesive. Specifically, the first cover member 22 is joined to the second cover member 24 with an adhesive in the through hole 25.

In this case, the abutting surface 22c is joined to the abutting surface 24c parallel to the abutting surface 22c with an adhesive. Further, in the first cover member 22, abutting surfaces (not illustrated) forming a pair in the Y-axis direction and not defining the through hole 23 are joined to abutting surfaces (not illustrated) forming a pair in the Y-axis direction across the through hole 25 with an adhesive.

From the above, it can be said that the tapered surface 22i is formed on a side parallel to the Y-axis direction on an outer periphery of the first cover member 22, the tapered surface 24i parallel to the tapered surface 22i is formed at a position of the first cover member 22 facing the tapered surface 22i of the second cover member 24, and the tapered surface 22i of the first cover member 22 and the tapered surface 24i of the second cover member 24 are joined with an adhesive.

Note that in a state where the transparent member 21 is joined to the first cover member 22 with an adhesive and the first cover member 22 is joined to the second cover member 24, at least the conveyance surface 22a and the conveyance surface 24a are flush with each other.

### 5. Production method for optical line sensor member

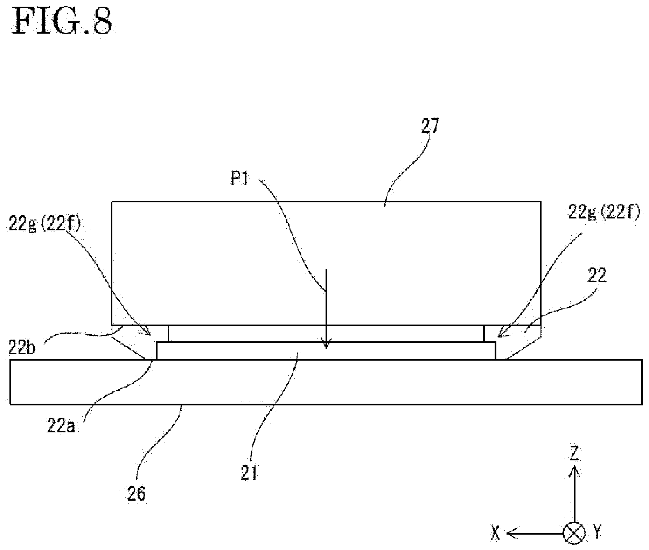

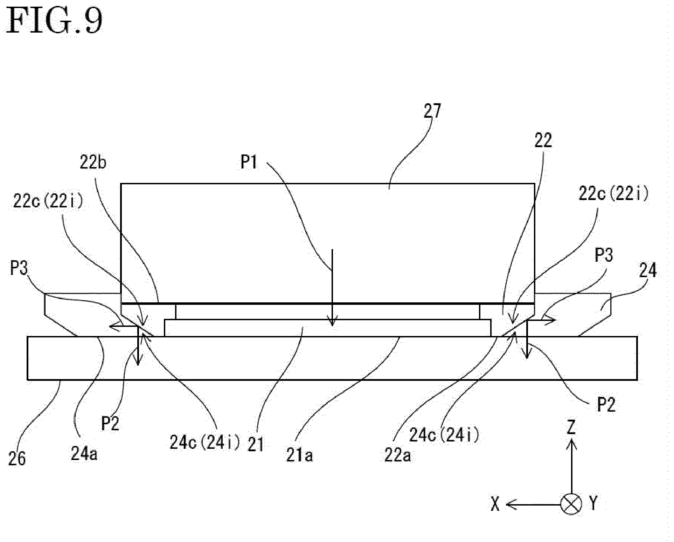

Next, an example of a production method for the optical line sensor member 9 in the third embodiment will be described with reference to FIGS. 8 and 9. FIG. 8 is a cross-sectional view schematically illustrating an example of a state in which the first cover member 22 is pressed. FIG. 9 is a cross-sectional view schematically illustrating another example of the state in which the first cover member 22 is pressed.

First, the transparent member 21, the first cover member 22, the second cover member 24, a flat plate 26, and a pressing member 27 are prepared. The flat plate 26 is a rigid plate, and a material and a material of the flat plate 26 are not particularly limited. The above similarly applies to the pressing member 27.

Note that from the viewpoint of a linear expansion coefficient, the transparent member 21, the first cover member 22, and the second cover member 24 are assumed to have warpage.

Next, as illustrated in FIG. 8, the first cover member 22 in which the transparent member 21 is arranged in a first through hole 23a is arranged on the flat plate 26. At this time, the conveyance surface 22a and a conveyance surface 21a abut on the flat plate 26. Further, an adhesive is applied to the abutting surface 22f and the like in advance.

Next, as illustrated in FIG. 8, the pressing member 27 is arranged on the incident surface 22b of the first cover member 22. Further, the first cover member 22 is pressed in a direction (pressing direction) P1 toward the flat plate 26 side by using the pressing member 27, and the first cover member 22 and the transparent member 21 are adhered.

In a case where the first cover member 22 is pressed using the pressing member 27, a force in the pressing direction P1 is applied to the pressing member 27 from the outside. Further, the first cover member 22 may be pressed using the weight of the pressing member 27. However, in this case, it is limited to a case where the direction of gravity and the pressing direction P1 coincide with each other.

Further, the force in the pressing direction P1 is a force stronger than stress, specifically, tensile stress and/or compressive stress, in the transparent member 21, the first cover member 22, and the like. Therefore, as illustrated in FIG. 8, when the force in the pressing direction P1 acts on the first cover member 22, warpage of the first cover member 22 is improved. Further, at this time, the force in the pressing direction P1 also acts on the transparent member 21 due to the abutting surface 22f. When the force in the pressing direction P1 acts on the first cover member 22, warpage of the transparent member 21 is also improved.

After the first cover member 22 and the transparent member 21 are adhered, the second cover member 24 is arranged on the flat plate 26 as illustrated in FIG. 9. At this time, the conveyance surface 24a abuts on the flat plate 26.

After the second cover member 24 is arranged on the flat plate 26, the first cover member 22 is arranged in the through hole 25 of the second cover member 24. At this time, abutting surfaces of the first cover member 22 face opposing abutting surfaces of the second cover member 24. Therefore, the abutting surface 22c faces the abutting surface 24c.

Note that an adhesive is applied to each abutting surface in advance. For example, an adhesive is applied to the abutting surface 22c and/or the abutting surface 24c.

Next, as illustrated in FIG. 9, the pressing member 27 is arranged on the incident surface 22b of the first cover member 22. Further, the first cover member 22 is pressed in the pressing direction P1 using the pressing member 27, and the first cover member 22 and the second cover member 24 are adhered.

As illustrated in FIG. 9, when the force in the pressing direction P1 acts on the first cover member 22, forces in directions P2 and P3 act on the second cover member 24 since the abutting surfaces 22c and the abutting surfaces 24c abut on each other.

The force in the direction P2 is a force in a direction perpendicular to the flat plate 26, and each of the abutting surfaces 24c of the second cover member 24 is pressed toward the flat plate 26 side by this force. The force in the direction P3 is a force for expanding the second cover member 24 outward, and the second cover member 24 expands outward. Therefore, when the first cover member 22 and the second cover member 24 are adhered, warpage of the second cover member 12 is improved, and the conveyance surfaces 21a, 22a, and 24a are in a state of being flush with each other as illustrated in FIG. 9.

As described above, in a case where the first cover member 22 and the second cover member 24 are adhered to each other using the flat plate 26 and the pressing member 27, the tapered surfaces 24i (abutting surfaces 24c) of the second cover member 24 are corrected in accordance with the tapered surfaces 22i (abutting surfaces 22c) of the first cover member 22. For this reason, the first cover member 22 and the second cover member 24 can be joined to each other while a difference in warpage correction between the two members is minimized. By the above, it is possible to eliminate a step in the first cover member 22 and the second cover member 24. That is, occurrence of a paper jam can be prevented.

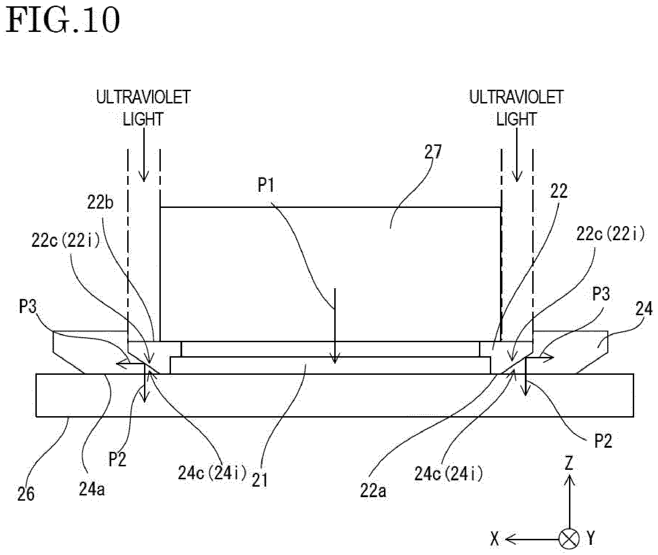

Further, when the first cover member 22 is transparent and the first cover member 22 is adhered to the second cover member 24 with an ultraviolet light curable adhesive, as illustrated in FIG. 10, the first cover member 22 and the second cover member 24 are irradiated with ultraviolet light using an ultraviolet light source in the outside (external ultraviolet light source). FIG. 10 is a cross-sectional view schematically illustrating an example of a state in which an adhesive is cured.

However, in this curing method, there is a possibility that the adhesive seeping out to the conveyance surface 22a and the conveyance surface 24a side is cured. Further, in a case where the adhesive seeping out to each conveyance surface side is cured, various troubles occur.

Therefore, in a case where the first cover member 22 is adhered to the second cover member 24 with an ultraviolet light curable adhesive, the pressing member 27 and the second cover member 24 are used as shielding objects from ultraviolet light. In this case, the size of a surface of the pressing member 27 abutting on the incident surface 22b is set to be the size that coincides with the conveyance surface 22a. Further, in this case, the entire conveyance surface 22a overlaps the pressing member 27 when viewed from the Z-axis direction.

When an ultraviolet light curable adhesive is cured, the first cover member 22 and the second cover member 24 are irradiated with ultraviolet light while the first cover member 22 and the second cover member 24 are in close contact with each other as illustrated in FIG. 10. At this time, the external ultraviolet light source is arranged at a position facing the transparent member 21 with the pressing member 27 interposed between them, and ultraviolet light from the external ultraviolet light source is emitted in the same direction as the pressing direction P1.

When ultraviolet light is emitted in the same direction as the pressing direction P1, a part of the ultraviolet light is blocked by the pressing member 27 and the second cover member 24, and the tapered surface 22i of the first cover member 22 and the tapered surface 24i of the second cover member 24 are irradiated with the ultraviolet light. Therefore, an adhesive interposed between each of the abutting surfaces 22c and each of the abutting surfaces 24c is cured due to ultraviolet light.

Further, in this case, since a part of ultraviolet light is blocked by the second cover member 24 and the pressing member 27, an adhesive seeping out to each conveyance surface side is not irradiated with ultraviolet light. Note that an adhesive that is not cured is removed by cleaning performed after the first cover member 22 and the second cover member 24 are joined to each other. Furthermore, instead of the flat plate 26, one having a rigid flat surface may be used.

In the third embodiment, the configuration in which the first cover member 22 has a substantially trapezoidal shape including a trapezoid in the entire or a part of a cross section in the X-axis direction, but such a configuration can also be employed for the transparent member 21. That is, the transparent member 21 may have a configuration in which the transparent member 21 has a substantially trapezoidal shape with a side on the conveyance path 3 side being a short side in a cross section taken along a direction orthogonal to a main scanning direction and has a tapered surface provided with an inclination on a side parallel to the main scanning direction. In this case, the first cover member 22 may have a tapered surface formed substantially parallel to the tapered surface provided on the side parallel to the main scanning direction of the transparent member 21. Then, the tapered surface of the transparent member 21 and the tapered surface of the first cover member 22 may be joined by an adhesive in a procedure similar to that in the case of adhering the first cover member 22 and the second cover member 24 described above.

### DESCRIPTION OF REFERENCE SIGNS

- 1: optical line sensor unit
- 2: paper sheet
- 3: conveyance path
- 4: housing
- 5: light source unit
- 8: light receiving unit
- 9: optical line sensor member
- 11: transparent member
- 11c: comb-shaped protruding portion
- 12: cover member
- 12c: comb-shaped recessed portion
- 15: transparent member
- 16: first cover member
- 16c: comb-shaped protruding portion
- 16f: abutting surface
- 17: through hole
- 18: second cover member
- 18c: comb-shaped recessed portion
- 21: transparent member
- 22: first cover member
- 22f: abutting surface
- 22i: tapered surface
- 23: through hole
- 24: second cover member
- 24f: abutting surface
- 24i: tapered surface
- 26: flat plate
- 27: pressing member

## Claims

1. An optical line sensor member that is a member of an optical line sensor unit including a light source unit that emits light toward a conveyance path and a light receiving unit that outputs a signal corresponding to a light amount from the conveyance path, the optical line sensor member comprising:
a transparent member that transmits light incident on the light receiving unit; and
a cover member that is arranged so as to surround an outer periphery of the transparent member and does not transmit light, wherein
a comb-shaped protruding portion is formed on a side parallel to a main scanning direction on an outer periphery of the transparent member, and a comb-shaped recessed portion that receives the comb-shaped protruding portion of the transparent member is formed at a position of the cover member, the position facing the transparent member, and
the comb-shaped protruding portion of the transparent member is joined to an abutting portion of the comb-shaped recessed portion of the cover member with an adhesive.

2. An optical line sensor member that is a member of an optical line sensor unit including a light source unit that emits light toward a conveyance path and a light receiving unit that outputs a signal corresponding to a light amount from the conveyance path, the optical line sensor member comprising:
a transparent member that transmits light incident on the light receiving unit;
a first cover member that holds an outer periphery of the transparent member; and
a second cover member that is arranged so as to surround an outer periphery of the first cover member and does not transmit light, wherein
a comb-shaped protruding portion is formed on a side parallel to a main scanning direction on an outer periphery of the first cover member, and a comb-shaped recessed portion that receives the comb-shaped protruding portion of the first cover member is formed at a position of the second cover member, the position facing the first cover, and
the comb-shaped protruding portion of the first cover member is joined to an abutting portion of a comb-shaped recessed portion of a second cover member with an adhesive.

3. An optical line sensor member that is a member of an optical line sensor unit including a light source unit that emits light toward a conveyance path and a light receiving unit that outputs a signal corresponding to a light amount from the conveyance path, the optical line sensor member comprising:
a transparent member that transmits light incident on the light receiving unit;
a first cover member that holds an outer periphery of the transparent member; and
a second cover member that is arranged so as to surround an outer periphery of the first cover member and does not transmit light, wherein
a tapered surface is formed on a side parallel to a main scanning direction on an outer periphery of the first cover member, a tapered surface parallel to the tapered surface of the first cover member is formed at a position of the second cover member, the position facing the first cover member, an inclination angle of a tapered surface of the first cover member and an inclination angle of a tapered surface of a second cover member are substantially same, and a tapered surface of the first cover member and a tapered surface of the second cover member are joined with an adhesive.

4. The optical line sensor member according to claim 2 or 3, wherein
the transparent member has a substantially rectangular cross section taken along a direction orthogonal to a main scanning direction, and
the first cover member has an opening into which the transparent member is inserted, a step surface is formed on a side of the opening, the side being parallel to the main scanning direction, and an end portion of the transparent member and the step surface of the first cover member are joined with an adhesive.

5. The optical line sensor member according to claim 2 or 3, wherein
the transparent member has a substantially trapezoidal shape in which a side on the conveyance path side is a short side in a cross section taken along a direction orthogonal to a main scanning direction, and has a tapered surface in which an inclination is provided on a side parallel to a main scanning direction, and
the first cover member has a tapered surface formed substantially parallel to a tapered surface provided on a side parallel to a main scanning direction of the transparent member, and
a tapered surface of the transparent member and a tapered surface of the first cover member are joined with an adhesive.

6. The optical line sensor member according to claim 1, wherein
a light blocking member is arranged near the comb-shaped protruding portion in the transparent member.

7. The optical line sensor member according to any one of claims 1 to 6, wherein
the adhesive is any of an ultraviolet light curable adhesive, a thermosetting adhesive, a thermoplastic adhesive, a moisture curable adhesive, and a two-liquid curable adhesive.

8. The optical line sensor member according to any one of claims 1 to 7, wherein
the transparent member is glass.

9. The optical line sensor according to claim 2 or 3, wherein
the first cover member is transparent.

10. A production method for the optical line sensor member according to claim 3, the production method comprising the steps of
applying the adhesive to a tapered surface of the first cover member or a tapered surface of the second cover member;
causing a tapered surface of the first cover member and a tapered surface of the second cover member to face each other;
placing a flat plate on the conveyance path side and pressing the first cover member against the flat plate by a pressing member from a direction opposite to the conveyance path side; and
curing the adhesive.

11. The production method for the optical line sensor member according to claim 10, wherein
the adhesive is an ultraviolet light curable adhesive, and
in the step of curing the adhesive, a tapered surface of the first cover member and a tapered surface of the second cover member are irradiated with ultraviolet light from an ultraviolet light source.

12. The production method for the optical line sensor member according to claim 11, wherein
in the step of curing the adhesive, part of ultraviolet light from the ultraviolet light source is blocked by the pressing member.
